# EUROPEAN PATENT APPLICATION

(11) **EP 3 162 191 A1**
(43) Date of publication of application: **03.05.2017**
(21) Application number: 15812440.4
(22) Date of filing: 18.03.2015
(51) Int. Cl.: A01G 9/08, A01C 11/00, A01G 31/02

(54) **PLANT-TRANSPLANTING DEVICE**

(30) Priority: 26.06.2014 JP 2014131626
(71) Applicant: Tsubakimoto Chain Co., Osaka-shi, Osaka 530-0005 (JP)
(72) Inventor: TSUTSUMI, Kazuhiro, Osaka-shi, Osaka 530-0005 (JP); ITO, Go, Osaka-shi, Osaka 530-0005 (JP)
(74) Representative: dompatent von Kreisler Selting Werner - Partnerschaft von Patent- und Rechtsanwälten mbB
(86) International application number: PCT/JP2015/058030
(87) International publication number: WO 2015/198655

(57) **Abstract**

There is provided a plant-transplanting device that, with a simple structure and at a low cost, realizes speedy and stable transplantation, prevents damage to a plant, and is easily automated. A plant-transplanting device 100 that transplants a seedbed B from a plant holder 110 to a cultivation pallet 120 includes a holder retaining mechanism 130, a pallet retaining mechanism 140 for retaining the cultivation pallet 120 below a holder retaining position of the holder retaining mechanism 130, and a lowering mechanism 150 for lowering the seedbed B retained by a holder seedbed retaining part 111 downward and inserting the seedbed B into a pallet seedbed retaining part 121.

## Description

### Technical Field

The present invention relates to a plant-transplanting device that transplants a seedbed from a plant holder to a cultivation pallet.

### Background Art

In the prior art, there is known an automatic planting device for a hydroponic seedling, which includes a seedbed transfer conveyor that transfers a seedbed by performing intermittent rotation and lateral reciprocation, a planting panel transfer conveyor that is provided below the seedbed transfer conveyor and transfers a planting panel by performing the intermittent rotation, several transfer opening/closing holders that are positioned above the front end part of the seedbed transfer conveyor, hold and separate several seedbed pieces positioned collectively in the front end row of the seedbed on the seedbed transfer conveyor, and transfer the seedbed pieces forward, several insertion opening/closing holders that are positioned in front of the several transfer opening/closing holders, hold and lower the seedbed pieces transferred by the transfer opening/closing holders, and plant the seedbed pieces by inserting same into holes of the planting panel on the planting panel transfer conveyor, and an operation mechanism that is coupled to the seedbed transfer conveyor and causes the seedbed transfer conveyor to intermittently reciprocate in a lateral direction by the width of the seedbed piece of the seedbed (see, e.g., Patent Literature 1).

### Citation List

### Patent Literature

Patent Literature 1: Japanese Patent Application Laid-open No. 2000-4699

### Summary of Invention

### Technical Problem

In the automatic planting device in Patent Literature 1, as a step before the seedbed is set in the automatic planting device, a step of taking the seedbed out from a nursery container that is filled with water in order to germinate seeds of a plant planted in the seedbed is required. However, since the seedbed is formed of a sponge-like material and is soft, it is difficult to automate the step of taking the seedbed out from the nursery container and the step needs to be carried out manually, so there is a problem of a workload being heavy and the seedbed being easily contaminated by sweat and various germs adherent to a human body.

In addition, since the seedbed is handled by using the insertion opening/closing holder to grasp one block of the seedbed from above, there is a problem in that the insertion opening/closing holder, when grasping the seedbed, may damage a sprout of a plant that juts out laterally from the seedbed.

The present invention has been devised to solve these problems, and an object thereof is to provide a plant-transplanting device that, with a simple structure and at a low cost, realizes speedy and stable transplantation, prevents damage to a plant, and is easily automated.

### Solution to Problem

The present invention is a plant-transplanting device for transplanting a seedbed from a plant holder, in which a plurality of holder seedbed retaining parts that pass through the plant holder in a vertical direction are disposed in a horizontal direction, to a cultivation pallet that has a pallet seedbed retaining part that passes through the cultivation pallet in the vertical direction, the plant-transplanting device including a holder retaining mechanism for retaining the plant holder, a pallet retaining mechanism for retaining the cultivation pallet below a holder retaining position of the holder retaining mechanism, and a lowering mechanism for lowering the seedbed retained by each of the holder seedbed retaining parts downward and inserting the seedbed into the pallet seedbed retaining part, whereby the above problem is solved.

### Advantageous Effects of Invention

According to a first aspect of the present invention, by adopting the configuration in which the seedbed held by the plant holder is transplanted into the cultivation pallet, when the seedbed is set in the plant-transplanting device, it is only necessary to set the plant holder that holds a plurality of the seedbeds in the plant-transplanting device, and hence it is not necessary to directly handle the soft seedbed, and it is possible to improve handling ease of the seedbed.

With this, also in the step of taking the seedbed out from the nursery container that is performed before the seedbed is set in the plant-transplanting device, it is only necessary to take the plant holder that holds a plurality of the seedbeds from the nursery container, and hence automation is facilitated and, with the facilitation of the automation, it is possible to prevent the seedbed from being contaminated by sweat and various germs adhering to a human body.

In addition, by transferring the seedbed without holding the soft seedbed from above, it is possible to prevent damage to a plant that juts out upward from the seedbed.

Further, by adopting the configuration in which the seedbed is inserted into the pallet seedbed retaining part by lowering the seedbed, even in the case where the sprout of the plant juts out from the top of the seedbed and spreads laterally, it is possible to prevent the sprout of the plant from being held between the pallet seedbed retaining part and the seedbed, and it is possible to reliably prevent the sprout of the plant that juts out from the top of the seedbed from being damage or contaminated by bringing a lowering member of the lowering mechanism into contact with the undersurface of the seedbed.

According to a second aspect of the present invention, the lowering mechanism has at least one lowering member that is movable in the vertical direction, and the lowering member has a holding part that holds the seedbed, whereby, even in the case where the seedbed serving as a transplantation target and the seedbed positioned adjacent to the seedbed as the transplantation target are partially joined together or the case where the lowering member is not in contact with the seedbed properly, it is possible to hold the seedbed using the holding part when the seedbed is lowered, and realize reliable transplantation of the seedbed. In the case where the plant-transplanting device is configured such that part of the seedbed is held by the holding part, it is only necessary to compress and deform part of the seedbed instead of deforming the entire seedbed, and hence it is possible to realize a stable transplantation operation and prevent leakage of a liquid such as water penetrated into the seedbed to the outside of the seedbed.

According to a third aspect of the present invention, the plant-transplanting device includes a moving mechanism for moving the plant holder and the cultivation pallet relative to each other in the horizontal direction, whereby it is possible to adjust the positional relationship between the holder seedbed retaining part and the pallet seedbed retaining part in the horizontal direction using the moving mechanism, and hence it is possible to improve flexibility in the design of the plant holder and the cultivation pallet such as the size of each of the plant holder and the cultivation pallet and the position of formation of each of the holder seedbed retaining part and the pallet seedbed retaining part.

According to a fourth aspect of the present invention, a first pitch between the holder seedbed retaining parts and a second pitch between the pallet seedbed retaining parts in a longitudinal direction are set so as to satisfy an expression nP1 = mP2 (where P1 is the first pitch, P2 is the second pitch, n is an integer of 1 or more, and m is an integer of 1 or more), whereby it is possible to transplant a plurality of the seedbeds collectively with one lowering operation in the longitudinal direction, and hence it is possible to realize speedy transplantation.

According to a fifth aspect of the present invention, a third pitch between the holder seedbed retaining parts and a fourth pitch between the pallet seedbed retaining parts in a lateral direction are set so as to satisfy an expression oP3 = pP4 (where P3 is the third pitch, P4 is the fourth pitch, o is an integer of 1 or more, and p is an integer of 1 or more), whereby it is possible to transplant a plurality of the seedbeds collectively with one lowering operation in longitudinal and lateral directions, and hence it is possible to realize the speedy transplantation.

According to a sixth aspect of the present invention, by providing a holder table for placing the plant holder, it is possible to easily retain the plant holder using the holder table and, by forming a plurality of guide holes in the holder table with an arrangement pattern identical to that of the plurality of the holder seedbed retaining parts, it is possible to reliably prevent the seedbed positioned adjacent to the seedbed serving as the transplantation target from being lowered together with the seedbed as the transplantation target when the seedbed is lowered.

### Brief Description of Drawings

[Fig. 1] Fig. 1 is a perspective view showing an initial state of a plant-transplanting device according to an embodiment of the present invention.
[Fig. 2] Fig. 2 is a perspective view showing a state in which a plant holder is moved to a seedbed lowering position.
[Fig. 3] Fig. 3 is a front view of the plant-transplanting device.
[Fig. 4] Fig. 4 is an explanatory view showing a seedbed.
[Fig. 5] Fig. 5 is a perspective view showing the plant holder.
[Fig. 6] Fig. 6 is a perspective view showing a state in which the plant holder is attached to the seedbed.
[Fig. 7] Fig. 7 shows a top view and a side view of the plant holder.
[Fig. 8] Fig. 8 is a perspective view showing a cultivation pallet.
[Fig. 9] Fig. 9 shows a top view and a side view of the cultivation pallet.
[Fig. 10] Fig. 10 is a perspective view showing a holder table.
[Fig. 11] Fig. 11 is a perspective view showing a lowering member in a state in which claw parts are spaced apart.

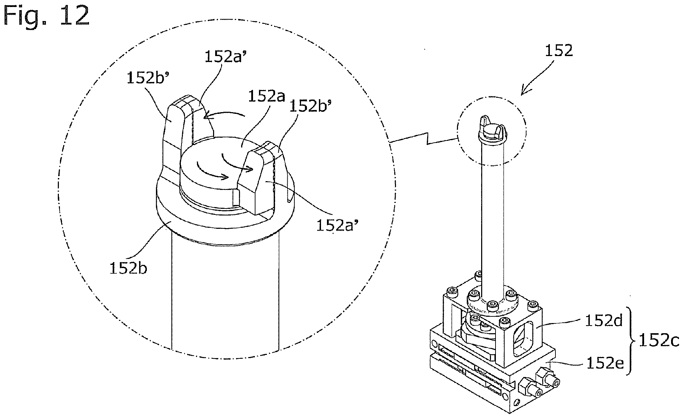

[Fig. 12] Fig. 12 is a perspective view showing the lowering member in a state in which the claw parts are in contact with each other.
[Fig. 13] Fig. 13 is an explanatory view showing a transplanting flow.

### Reference Signs List

100 Plant-transplanting device
110 Plant holder
111 Holder seedbed retaining part
112 Perforated plate part
112a Vertical through hole
120 Cultivation pallet
121 Pallet seedbed retaining part
121a Upper tapered part
130 Holder retaining/moving mechanism
131 Holder table
131a Perforated plate part
131b Guide hole
131c Frame part
132 Lateral linear actuator
133 Longitudinal linear actuator
140 Pallet retaining mechanism
141 Pallet table
141a Guide hole
150 Lowering mechanism
151 Supporting part
152 Lowering member
152a First holding member
152a' First claw part
152b Second holding member
152b' Second claw part
152c Base part
152d Support stand
152e Rotational driving part
152f Advance/retreat driving part
153 Lateral linear actuator
154 Longitudinal linear actuator
160 Frame
B Seedbed
S Plant sprout
P1 First pitch (pitch between holder seedbed retaining parts in a longitudinal direction)
P2 Second pitch (pitch between pallet seedbed retaining parts in the longitudinal direction)
P3 Third pitch (pitch between holder seedbed retaining parts in a lateral direction)
P4 Fourth pitch (pitch between pallet seedbed retaining parts in the lateral direction)

### Description of Embodiments

Hereinbelow, a plant-transplanting device 100 as an embodiment of the present invention will be described based on the drawings.

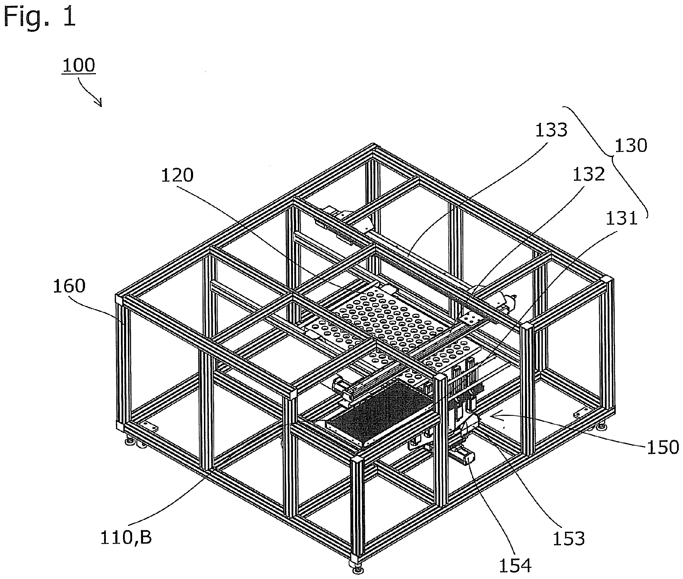

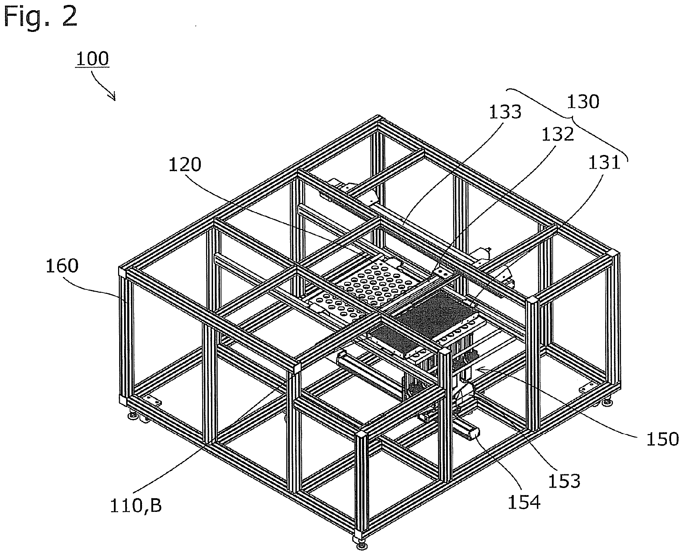

As shown in Fig. 1 and Fig. 2, the plant-transplanting device 100 includes a plant holder 110, a cultivation pallet 120, a nursery container (not shown), a holder retaining/moving mechanism 130, a pallet retaining mechanism 140, a lowering mechanism 150, a handling mechanism (not shown) that moves the plant holder 110, and a frame 160 that supports the individual parts such as the holder retaining/moving mechanism 130, the pallet retaining mechanism 140, and the lowering mechanism 150, and transplants a seedbed B held by the plant holder 110 to the cultivation pallet 120 that is larger in size than the plant holder 110.

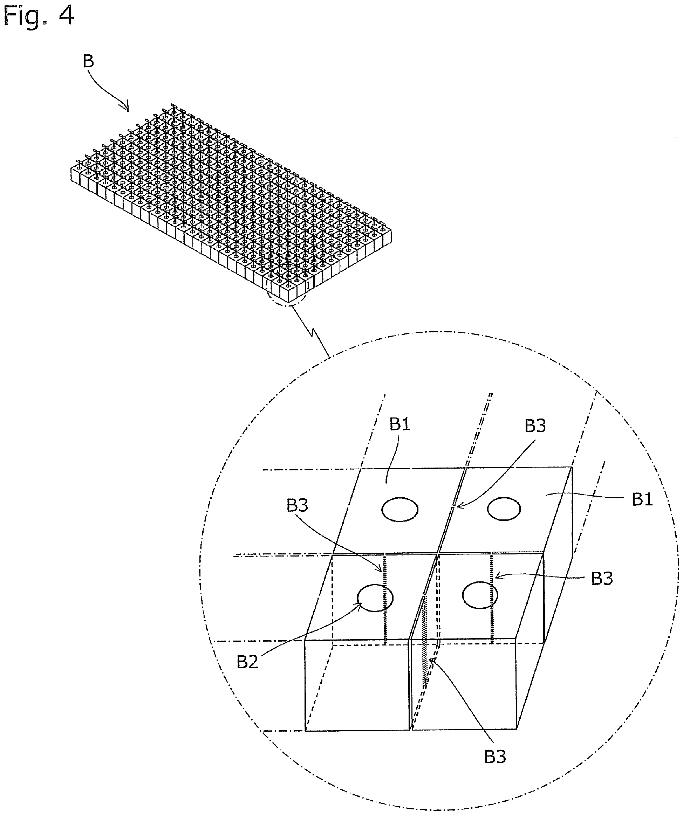

The seedbed B in the present embodiment is formed of urethane or the like, and is formed into a mat-like shape in which a plurality of seedbeds B1 each having a seed and seedling accommodating part B2 are coupled to each other longitudinally and laterally, as shown in Fig. 4. Each seedbed B1 is partially coupled to the adjacent seedbed B1 at the central portion of each side of the seedbed B1 with a coupling part B3 that extends along a thickness direction of the seedbed B. Note that the specific form of the seedbed B1 is not limited to the form described above, and the specific form thereof may be any form.

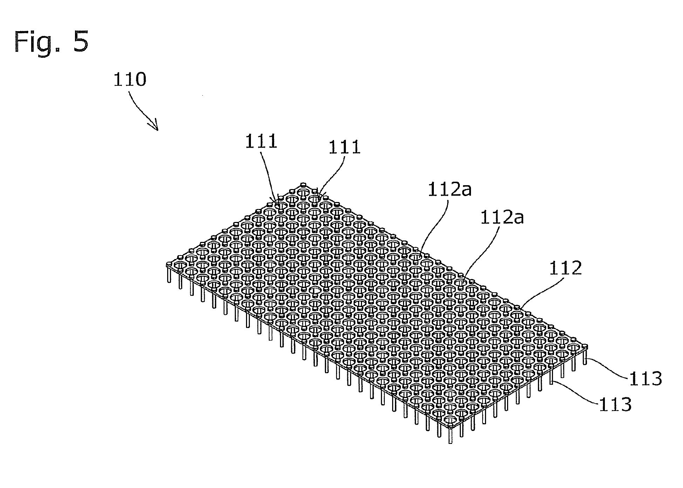

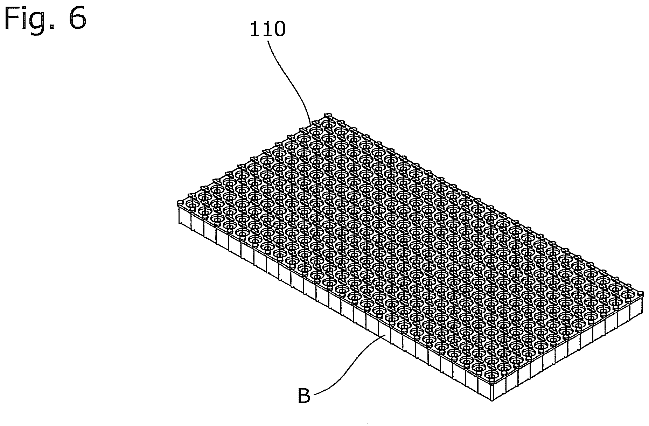

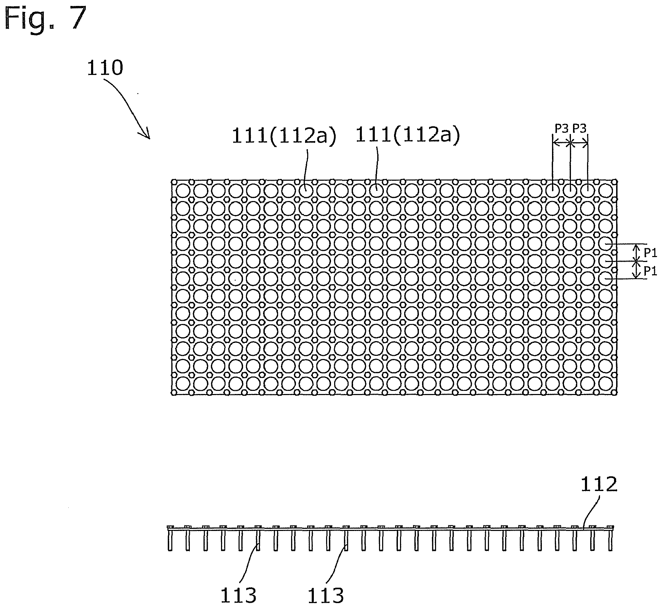

The plant holder 110 is formed of a material having adequate strength such as metal. As shown in Fig. 5 and Fig. 7, the plant holder 110 has a perforated plate part 112 that has a plurality of vertical through holes 112a, and a plurality of retaining pins 113 that are attached to the lower surface of the perforated plate part 112 and extend in a vertical direction, and holds the seedbed B by inserting the plurality of the retaining pins 113 into slits of the seedbed B, as shown in Fig. 6. The plurality of the retaining pins 113 are disposed in a lattice shape when viewed in the vertical direction, and spaces defined by the plurality of the retaining pins 113 and the plurality of the vertical through holes 112a function as a plurality of holder seedbed retaining parts 111 that pass through the plant holder 110 in the vertical direction and are able to individually retain the seedbed B.

As shown in Fig. 7, the holder seedbed retaining parts 111 are disposed in a rectangular lattice shape with a first pitch P1 in a longitudinal direction and with a third pitch P3 in a lateral direction when viewed in the vertical direction. Note that the pitch mentioned in the present invention means a pitch between the centers of holes or members.

Note that the specific form of the plant holder 110 may be any form as long as a plurality of the holder seedbed retaining parts 111 that pass through the plant holder 110 in the vertical direction are disposed in a horizontal direction.

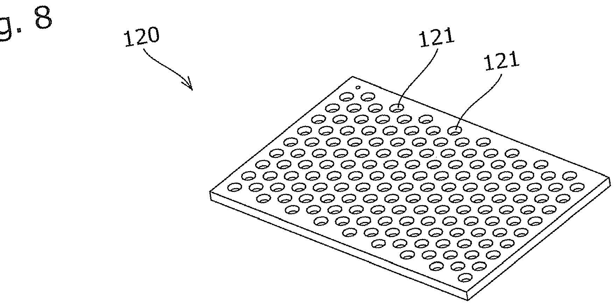

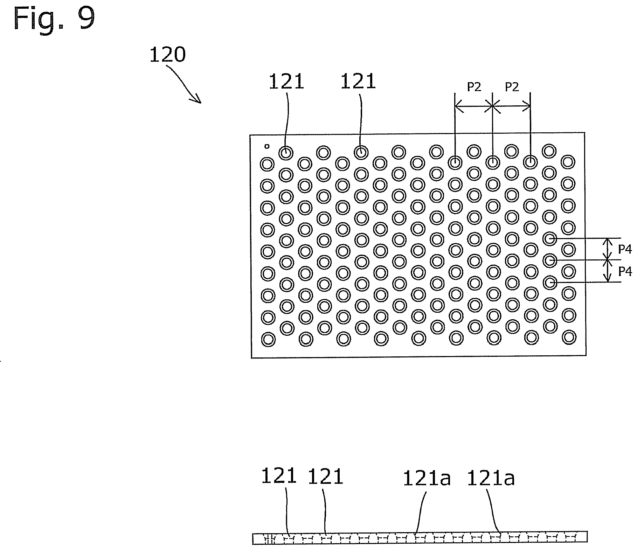

The cultivation pallet 120 is formed of synthetic resin or the like (mainly foam polystyrene) and, as shown in Fig. 8 and Fig. 9, the cultivation pallet 120 has a plurality of pallet seedbed retaining parts 121 each having the shape of a circular hole that pass through the cultivation pallet 120 in the vertical direction and retain the seedbed B. Each pallet seedbed retaining part 121 has an upper tapered part 121a of which the diameter is increased in an upward direction on the side of the upper surface of the cultivation pallet 120.

As shown in Fig. 9, the plurality of the pallet seedbed retaining parts 121 are disposed in a hexagonal lattice shape when viewed in the vertical direction. In the case where a pitch between those of the plurality of the pallet seedbed retaining parts 121 that are positioned adjacent to each other in the longitudinal direction is assumed to be a second pitch P2, the first pitch P1 of the holder seedbed retaining part 111 and the second pitch P2 of the pallet seedbed retaining part 121 are set so as to satisfy an expression nP1 = mP2 (where n is an integer of 1 or more, and m is an integer of 1 or more). With this, it is possible to transplant a plurality of the seedbeds B collectively with one lowering operation in the vertical direction, and hence it is possible to realized speedy transplantation. The second pitch P2 is larger than the first pitch P1.

In addition, as shown in Fig. 9, in the case where a pitch between those of the plurality of the pallet seedbed retaining parts 121 that are positioned adjacent to each other in the lateral direction is assumed to be a fourth pitch P4, the third pitch P3 of the holder seedbed retaining part 111 and the fourth pitch P4 of the pallet seedbed retaining part 121 are set so as to satisfy an expression oP3 = pP4 (where o is an integer of 1 or more, and p is an integer of 1 or more). With this, it is possible to transplant a plurality of the seedbeds B collectively with one lowering operation in the lateral direction, and hence it is possible to realize the speedy transplantation. The fourth pitch P4 is larger than the third pitch P3.

The nursery container (not shown) is a container that is filled with water, and is for accommodating the plant holder 110 that holds a plurality of the seedbeds B to germinate seeds of a plant planted in the seedbed B. Water tightness is required of the nursery container (not shown), and the nursery container may be provided with a handle for automation or the like.

The holder retaining/moving mechanism 130 retains the plant holder 110 and moves the plant holder 110 in the longitudinal and lateral directions. As shown in Fig. 1 and Fig. 2, the holder retaining/moving mechanism 130 has a holder table 131 on which the seedbed B held by the plant holder 110 is placed, a lateral linear actuator 132 that moves the holder table 131 in the lateral direction, and a longitudinal linear actuator 133 that moves the holder table 131 in the longitudinal direction.

Thus, by providing the moving mechanism that moves the plant holder 110 and the cultivation pallet 120 relative to each other in the horizontal direction, it is possible to adjust the positional relationship between the holder seedbed retaining part 111 and the pallet seedbed retaining part 121 in the horizontal direction using the moving mechanism, and hence it is possible to improve flexibility in the design of the plant holder 110 and the cultivation pallet 120 such as the size of each of the plant holder 110 and the cultivation pallet 120 and the position of formation of each of the holder seedbed retaining part 111 and the pallet seedbed retaining part 121. Note that the specific form of the holder retaining/moving mechanism 130 is not limited to the form described above, and the specific form thereof may be any form such as a hand arm that retains and moves the plant holder 110.

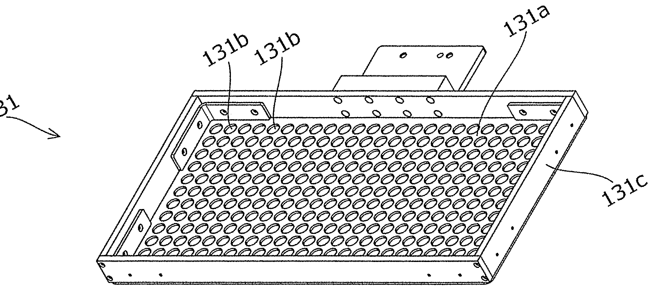

As shown in Fig. 10, the holder table 131 has a perforated plate part 131a that has a plurality of guide holes 131b that pass through the perforated plate part 131a in the vertical direction, and a frame part 131c that rises from four sides of the perforated plate part 131a. Each guide hole 131b is formed to have a size that allows the seedbed B and holding members 152a and 152b of a lowering member 152 to pass through the guide hole 131b. The plurality of the guide holes 131b that are equal in number to the holder seedbed retaining parts 111 of the plant holder 110 are provided with an arrangement pattern identical to that of the holder seedbed retaining parts 111 thereof. Thus, the holder table 131 of the present embodiment has a function of retaining the plant holder 110 and a drag prevention function of preventing the seedbed B positioned adjacent to the seedbed B serving as a transplantation target from being lowered together with the seedbed B as the transplantation target with the lowering operation. Note that the plant holder 110 may be directly retained by the lateral linear actuator 132 and the longitudinal linear actuator 133 without providing the holder table 131. In addition, the shape of the guide hole 131b may be any shape such as a rectangular shape and, in the case where the shape thereof is circular, the behavior of the seedbed B to be lowered is stabilized.

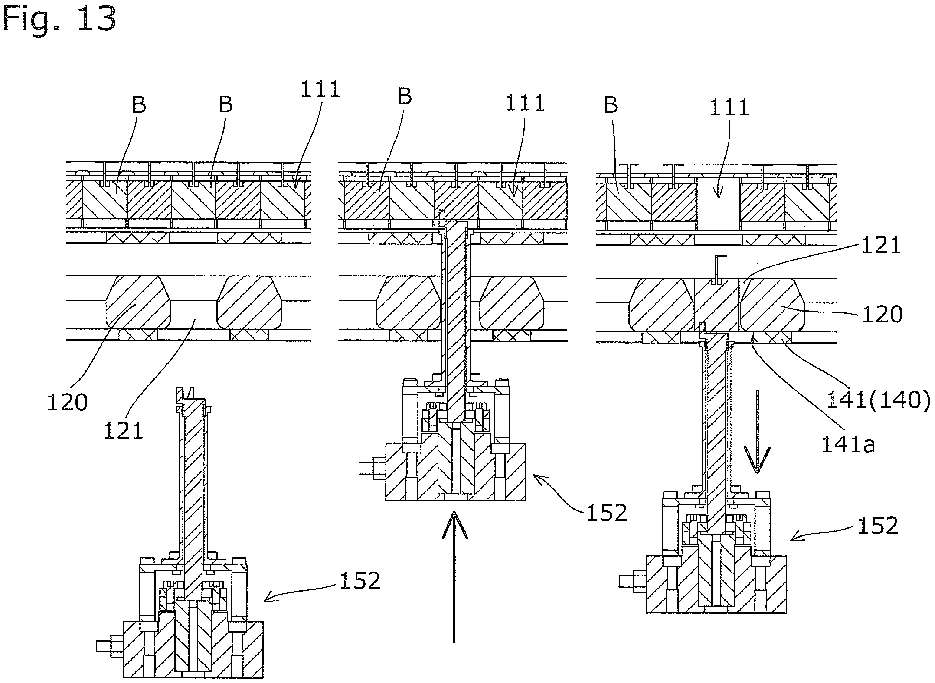

As shown in Fig. 13, the pallet retaining mechanism 140 retains the cultivation pallet 120 in a fixed state below the plant holder 110 retained by the holder retaining/moving mechanism 130, and has a pallet table 141 on which the cultivation pallet 120 is placed. The pallet table 141 is fixed to the frame 160.

As shown in Fig. 13, the pallet table 141 has a plurality of guide holes 141a that pass through the pallet table 141 in the vertical direction. The plurality of the guide holes 141a that are equal in number to the plurality of the pallet seedbed retaining parts 121 are disposed with the arrangement pattern identical to that of the plurality of the pallet seedbed retaining parts 121 when viewed in the vertical direction.

The lowering mechanism 150 lowers the seedbed B retained by the holder seedbed retaining part 111 downward, and inserts the seedbed B into the pallet seedbed retaining part 121.

As shown in Fig. 1 to Fig. 3, the lowering mechanism 150 has a supporting part 151, a plurality of the lowering members 152 that are supported by the supporting part 151, a lateral linear actuator 153 that moves the supporting part 151 in the lateral direction, and a longitudinal linear actuator 154 that moves the lateral linear actuator 153 in the longitudinal direction. The plurality of the lowering members 152 are supported by the supporting part 151 in a state in which the plurality of the lowering members 152 are arranged in a row in the lateral direction, and are supported so as to be movable in the lateral direction and the longitudinal direction by the lateral linear actuator 153 and the longitudinal linear actuator 154.

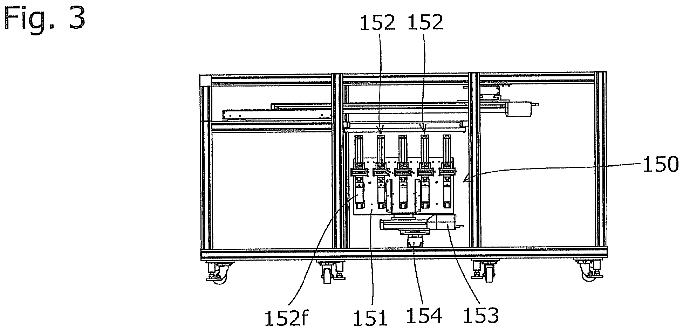

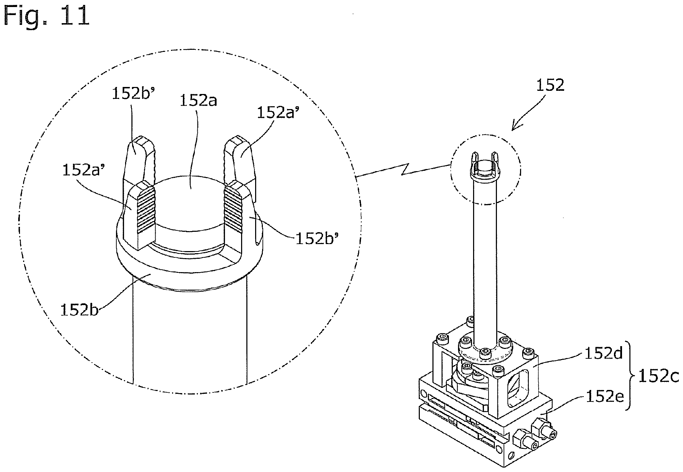

As shown in Fig. 3 and Fig. 11, the lowering member 152 includes a first holding member 152a and a second holding member 152b that constitute a holding part that holds the seedbed B, a base part 152c that has a support stand 152d and a rotational driving part 152e, and an advance/retreat driving part 152f that is constituted by a linear actuator that drives the base part152c such that the base part 152c is able to advance or retreat along the vertical direction, the rotational driving part 152e rotates the first holding member 152a and the second holding member 152b relative to each other about a predetermined rotation axis to thereby hold the seedbed B using a first claw part 152a' formed in the first holding member 152a and a second claw part 152b' formed in the second holding member 152b, and the advance/retreat driving part 152f drives the base part 152c such that the base part 152c advances or retreats in the vertical direction to thereby transfer the held seedbed B in the vertical direction.

Note that, in the present embodiment, the individual lowering members 152 are configured so as to be able to operate (an opening/closing operation of the claw parts and the advance/retreat driving in the vertical direction) independently of each other and, in the case where all of the lowering members 152 are configured so as to perform the same operation at the same time, the rotational driving part 152e and the advance/retreat driving part 152f may be provided so as to be shared by the plurality of the lowering members 152.

In addition, in the present embodiment, the plurality of the lowering members 152 are provided, but it is only necessary to provide at least one lowering member 152.

In the case where the lowering members 152 that are equal in number (nine) to the pallet seedbed retaining parts 121 in the lateral direction are arranged in a row, it is not necessary to provide the lateral linear actuator 153 that moves the supporting part 151 in the lateral direction.

Further, in the case where the lowering members 152 that are equal in number to the plurality of the pallet seedbed retaining parts 121 are disposed with the arrangement pattern identical to that of the plurality of the pallet seedbed retaining parts 121 when viewed in the vertical direction, it is not necessary to move the lowering member 152 in the horizontal direction, and hence it is not necessary to provide the lateral linear actuator 153 and the longitudinal linear actuator 154.

The handling mechanism (not shown) moves the plant holder 110 to the holder table 131, and sets the plant holder 110 on the holder table 131. The specific form of the handling mechanism (not shown) may be any form such as a mechanism having a holding claw or a supporting arm.

Next, the transplanting flow of the seedbed B in the present embodiment will be described based on Fig. 13.

First, after moving the lowering member 152 to a position below the seedbed B serving as the transfer target, the lowering member 152 is moved upward, and the seedbed B is held by the claw parts 152a' and 152b' of the lowering member 152.

Next, the lowering member 152 is moved downward while the seedbed B is held, and the seedbed B is thereby inserted into the pallet seedbed retaining part 121.

Next, the holding of the seedbed B by the claw parts 152a' and 152b' is released, and the lowering member 152 is retreated downward.

In the plant-transplanting device 100 of the present embodiment obtained in this manner, by moving the plant holder 110 having a small size, it is easy to secure movement space as compared with the case where the cultivation pallet 120 having a large size is moved, and hence it is possible to save space.

In addition, the lowering mechanism 150 has a plurality of the lowering members 152, whereby it is possible to transplant a plurality of the seedbeds B collectively with one lowering operation, and hence it is possible to realize transplantation that requires a short length of time.

Further, by providing the handling mechanism (not shown) that moves the plant holder 110 to the holder retaining/moving mechanism 130, it is possible to avoid direct contact of a human hand with the plant holder 110 when the plant holder 110 is set in the holder retaining/moving mechanism 130, and prevent the seedbed B from being contaminated by sweat and various germs adhering to a human body.

Thus, the embodiment of the present invention has been described in detail, but the present invention is not limited to the above embodiment, and various design changes can be made without departing from the present invention described in the claims.

For example, in the embodiment described above, the description has been made on the assumption that the cultivation pallet is installed in the fixed state, and the plant holder and the lowering mechanism are moved in the horizontal direction, but the specific embodiment is not limited thereto and, for example, the plant holder may be installed in the fixed state, and the cultivation pallet and the lowering mechanism may be moved in the horizontal direction.

In addition, in the embodiment described above, the description has been made on the assumption that the lowering member has the holding part (the first holding member and the second holding member) for holding the seedbed, but an engaging part that engages with the seedbed may be provided in the lowering member without providing the holding part in the lowering member. In the case where the holding part is provided in the lowering member, the specific form of the holding part is not limited to the form described above.

## Claims

1. A plant-transplanting device for transplanting a seedbed from a plant holder, in which a plurality of holder seedbed retaining parts that pass through the plant holder in a vertical direction are disposed in a horizontal direction, to a cultivation pallet that has a pallet seedbed retaining part that passes through the cultivation pallet in the vertical direction, the plant-transplanting device comprising:
a holder retaining mechanism for retaining the plant holder;
a pallet retaining mechanism for retaining the cultivation pallet below a holder retaining position of the holder retaining mechanism; and
a lowering mechanism for lowering the seedbed retained by each of the holder seedbed retaining parts downward and inserting the seedbed into the pallet seedbed retaining part.

2. The plant-transplanting device according to claim 1, wherein
the lowering mechanism has at least one lowering member that is movable in the vertical direction, and
the lowering member has a holding part that holds the seedbed.

3. The plant-transplanting device according to claim 1 or 2, further comprising:
a moving mechanism for moving the plant holder and the cultivation pallet relative to each other in the horizontal direction.

4. The plant-transplanting device according to any one of claims 1 to 3, further comprising:
the plant holder; and
the cultivation pallet, wherein
the lowering mechanism has a plurality of the lowering members that are disposed in the horizontal direction, and
in a case where, when the plant holder retained by the holder retaining mechanism and the cultivation pallet retained by the pallet retaining mechanism are viewed in the vertical direction, a pitch between those of the plurality of the holder seedbed retaining parts that are positioned adjacent to each other in a longitudinal direction is assumed to be a first pitch, and a pitch between those of a plurality of the pallet seedbed retaining parts that are positioned adjacent to each other in the longitudinal direction is assumed to be a second pitch,
the first pitch and the second pitch are set so as to satisfy an expression nP1 = mP2 (where P1 is the first pitch, P2 is the second pitch, n is an integer of 1 or more, and m is an integer of 1 or more).

5. The plant-transplanting device according to claim 4, wherein
in a case where, when the plant holder retained by the holder retaining mechanism and the cultivation pallet retained by the pallet retaining mechanism are viewed in the vertical direction, a pitch between those of the plurality of the holder seedbed retaining parts that are positioned adjacent to each other in a lateral direction is assumed to be a third pitch, and a pitch between those of the plurality of the pallet seedbed retaining parts that are positioned adjacent to each other in the lateral direction is assumed to be a fourth pitch,
the third pitch and the fourth pitch are set so as to satisfy an expression oP3 = pP4 (where P3 is the third pitch, P4 is the fourth pitch, o is an integer of 1 or more, and p is an integer of 1 or more).

6. The plant-transplanting device according to any one of claims 1 to 5, wherein
the holder retaining mechanism has a holder table for placing the plant holder,
a plurality of guide holes that pass through the holder table in the vertical direction are formed in the holder table, and
the plurality of the guide holes that are equal in number to the plurality of the holder seedbed retaining parts are disposed with an arrangement pattern identical to that of the plurality of the holder seedbed retaining parts when the plurality of the guide holes are viewed in the vertical direction.
